Europäisches Patentamt

European Patent Office

Office européen des brevets

(19)

(11) Numéro de publication: **0 270 441 B1**

## FASCICULE DE BREVET EUROPEEN

(12)

(45) Date de publication de fascicule du brevet:
11.09.91

(21) Numéro de dépôt: 87402591.9

(22) Date de dépôt: 17.11.87

(51) Int. Cl.5: **B01D 67/00**, B26F 1/31

(54) Réalisation de membranes microporeuses asymétriques par double irradiation.

(30) Priorité: 20.11.86 FR 8616163

(43) Date de publication de la demande:
08.06.88 Bulletin 88/23

(45) Mention de la délivrance du brevet:
11.09.91 Bulletin 91/37

(84) Etats contractants désignés:
BE CH DE FR GB IT LI NL SE

(56) Documents cités:
GB-A- 1 375 204
US-A- 3 303 085
US-A- 3 612 871

IEEE TRANSACTIONS ON NUCLEAR SCIEN-
CE, vol. NS-28, no. 2, avril 1981, pages
1448-1451, IEEE, New York, US; R. SPOHR:
"Heavy ion nuclear tracks - an emerging
technology"

(73) Titulaire: COMMISSARIAT A L'ENERGIE ATO-
MIQUE Etablissement de Caractère Scientifique Technique et Industriel
31/33, rue de la Fédération
F-75015 Paris(FR)

Titulaire: CENTRE NATIONAL DE LA RECHER-
CHE SCIENTIFIQUE (CNRS)
15, Quai Anatole France
F-75700 Paris Cedex 07(FR)

(72) Inventeur: Balanzat, Emmanuel
89, rue de Hastings
F-14000 Caen(FR)
Inventeur: Bieth, Claude
Rue de l'Avenir
F-14670 Troarn(FR)

(74) Mandataire: Mongrédien, André et al
c/o BREVATOME 25, rue de Ponthieu
F-75008 Paris(FR)

EP 0 270 441 B1

Rank Xerox (UK) Business Services

## Description

Le présent brevet a pour objet un procédé de réalisation de membranes microporeuses asymétriques par double irradiation de particules, en particulier par des ions lourds, pour obtenir des membranes asymétriques microporeuses possédant un double réseau de pores.

Les membranes microporeuses, utilisables en particulier dans le domaine de la filtration, peuvent en effet être réalisées avec des particules qui créent des chaînes de défauts dans les membranes de verre, de cristal ou de polymère correspondant au trajet des particules. Ces défauts rendent leurs abords immédiats très sensibles à certains agents chimiques : une exposition relativement courte à ces agents permet de créer des pores aux emplacements de passage des particules ; une exposition plus longue permet d'élargir ces pores mais à une vitesse de plus en plus faible. La durée de l'attaque chimique permet donc de maîtriser le diamètre des pores réalisés, c'est-à-dire la caractéristique de filtration du filtre.

Mais, dans de nombreuses applications, le débit de fluide filtré par ces membranes peut être insuffisant. Plusieurs possibilités sont alors ouvertes. On peut tout d'abord réduire l'épaisseur de la membrane, mais c'est au détriment de sa résistance mécanique. On peut encore augmenter la porosité de la membrane, c'est-à-dire le nombre de pores par unité de surface. Il suffit d'irradier plus longuement ou avec un débit de particules plus élevé. Cependant, comme la répartition des impacts est irrégulière et obéit aux lois statistiques, la probabilité d'impacts multiples très proches les uns des autres est plus élevée. De tels groupes d'impacts donneront un seul pore plus large à l'issue de l'attaque chimique, ce qui conduira à un filtre de sélectivité moins bonne, car des corpuscules plus gros en suspension pourront occasionnellement passer à travers.

La présente invention concerne donc un procédé de fabrication de membranes microporeuses permettant de filtrer au moyen de pores de longueur réduite sans toutefois diminuer excessivement l'épaisseur et la résistance mécanique de la membrane et sans accroître excessivement la porosité. Ce procédé se caractérise en ce qu'il comprend une première irradiation de la membrane à traiter par des particules d'énergie insuffisante pour la traverser, une seconde irradiation de la membrane par des particules d'énergie suffisante pour la traverser, et au moins une attaque chimique permettant d'obtenir un double réseau de pores aux emplacements traversés par les particules d'irradiation, les pores du premier réseau étant de plus gros diamètre et débouchant sur une surface de la membrane, les pores du second réseau étant de plus petit diamètre et débouchant sur les deux surfaces de la membrane.

De telles membranes apparaissent dans le brevet EP-A-0 178 831, où elles sont en aluminium et produites par une anodisation.

Les irradiations peuvent être dans de nombreux cas effectuées au moyens d'ions lourds issus d'un accélérateur de particules.

Le procédé objet de l'invention va maintenant être décrit plus concrètement à l'aide des figures données en annexe énumérées ci-dessous et données à titre illustratif et non limitatif :
- les figures 1 et 2 représentent deux modes d'irradiation utilisables pour l'invention,
- la figure 3 représente un schéma de déroulement d'attaque chimique d'une membrane à l'emplacement d'une irradiation,
- les figures 4, 5 et 6 représentent la coupe de trois membranes obtenues selon l'invention mais avec des irradiations effectuées différemment.

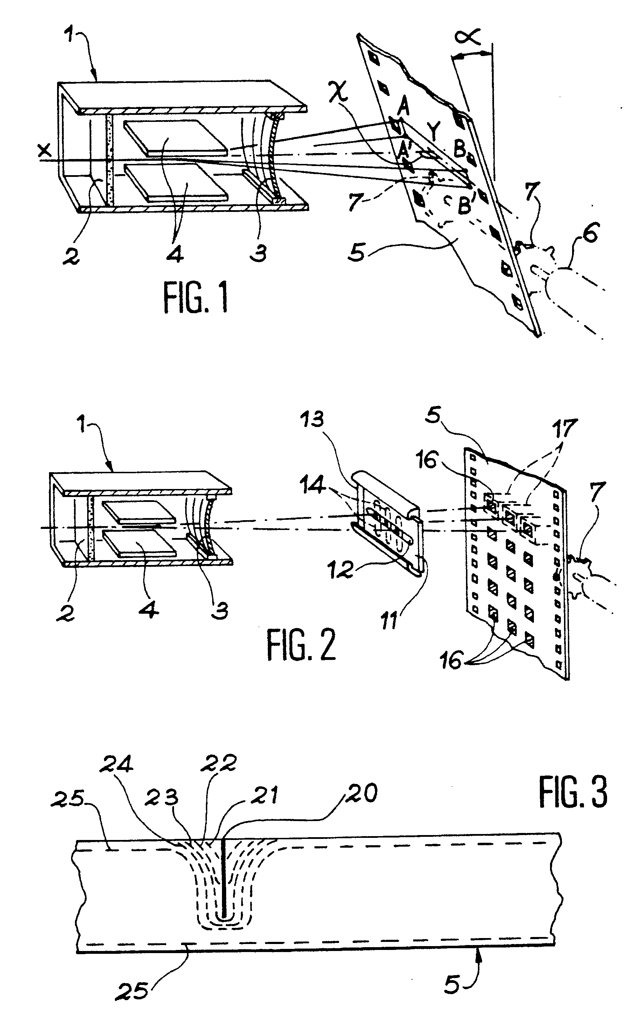

Si on se reporte à la figure 1, on remarque l'extrémité d'un accélérateur de particules 1 - généralement d'ions lourds plus énergétiques, tels que ceux de krypton ou d'argon par exemple - muni successivement d'une feuille de carbone 2 qui capte une partie du nuage électronique des ions composant le faisceau et augmente ainsi leur charge électrique, un aimant 4 qui crée un champ magnétique variable avec le temps et dévie donc plus ou moins le faisceau d'ions, et une paroi 3 étanche qui permet, au prix d'une diminution acceptable de l'énergie des ions, de placer la membrane 5 à irradier dans l'air ambiant ou dans une atmosphère d'oxygène qui rendra l'attaque chimique plus facile. Une modulation périodique de champ magnétique à l'aide de l'aimant 4 permet d'irradier par balayage transversal une bande ABA'B' sur la membrane 5 dont la largeur AA' dépend de la divergence du faisceau d'ions ; une condition de fonctionnement intéressant du point de vue économique est que la longueur de balayage AB soit importante, ce qui peut se réaliser le plus facilement en augmentant la charge électrique des ions et donc en facilitant leur déviation, et justifie ainsi la feuille de carbone 2 qui peut par exemple, avec une épaisseur bien choisie, transformer un faisceau d'ions $Ar^{6+}$ en un faisceau comprenant presque exclusivement les ions $Ar^{16+}$, $Ar^{17+}$, $Ar^{18+}$.

La source d'ions peut être continue ou intermittente. Dans le premier cas, il est nécessaire que le balayage garde constamment la même vitesse à l'aller comme au retour pour obtenir une irradiation uniforme sur la surface de la membrane 5 ; dans le deuxième cas, les balayages doivent être synchronisés sur les périodes d'émission du faisceau.

Le faisceau peut irradier la membrane 5 avec une incidence longitudinale α dont l'utilisateur est maître ; de toute manière la membrane 5 est mobile et défile longitudinalement devant le faisceau dans une direction perpendiculaire à la direction de balayage AB, ce que l'on peut réaliser simplement par un moteur 6 mettant en mouvement une double roue dentée 7 qui s'engrène dans des encoches de la membrane 5. L'avance de la membrane 5 doit être suffisamment lente pour que le faisceau puisse irradier régulièrement ; elle peut être continue dans le cas d'une source continue mais peut aussi s'effectuer par pas entre deux balayages dans le cas d'une source intermittente. On appelle χ incidence transversale et on note χ l'angle défini par la direction moyenne XY du faisceau d'ions et la bande ABA'B et choisi également par l'utilisateur.

Un second mode possible d'irradiation d'une membrane par un faisceau d'ions est représenté figure 2. D'après cette conception on dispose deux écrans 11 et 13 parallèles entre l'accélérateur de particules 1 et la membrane 5. L'un de ces écrans 11 porte une fente 12 parcourue par le faisceau au cours de son balayage, alors que l'autre écran 13 comprend plusieurs fentes 14 perpendiculaires à la fente 12. Il en résulte que le faisceau ne peut plus irradier la membrane 5 que sur des zones isolées 16 dont la position et la dimension sont déterminées par les intersections de la fente 12 et des fentes 14. L'intensité de l'irradiation dépend quant à elle essentiellement de la vitesse de balayage et du débit de particules du faisceau ; elle peut être contrôlée pour chacune des zones 16 par un détecteur 17 placé derrière la membrane 5 dans le cas où les ions sont suffisament accélérés pour traverser complètement celle-ci.

L'irradiation de zones 16 bien définies nécessite que l'avance de la membrane 5 ne soit effectuée qu'entre deux balayages du faisceau. Il est alors avantageux d'interrompre l'émission de ce faisceau. La synchronisation correspondante est facile à réaliser, par exemple au moyen d'un microprocesseur, et ne sera pas décrite ici.

On se reporte maintenant à la figure 3 qui explique le déroulement de l'attaque chimique d'une membrane 5 soumise à une irradiation. Ici un seul impact a été représenté, et on suppose que la particule n'a pas été portée à une énergie suffisante pour traverser complètement cette membrane 5 ; elle a cependant créé un certain nombre de défauts dans la structure moléculaire de la membrane 5 aux alentours de sa trajectoire 20 ; ces défauts sont très sensibles à certains produits chimiques qui provoquent d'abord une piqûre 21 à la surface de la membrane 5 et dont la progression est plus rapide près de la trajectoire 20, où les défauts moléculaires sont plus importants, que dans les directions orthogonales. Il en résulte une piqûre dont la profondeur croît rapidement et dont le diamètre croît plus lentement, comme le montrent les lignes 22 et 23 qui représentent des étapes de son accroissement.

Quand l'attaque chimique s'est exercée sur toute la trajectoire 20, sa progression est de plus en plus lente et, après avoir atteint la ligne 24, ne s'effectue plus que sur des parties saines de la membrane 5 : la vitesse de progression de l'attaque est alors d'un ordre de grandeur très inférieur et toute la surface en contact avec le produit chimique est attaquée à une vitesse approximativement uniforme, ce qui signifie qu'un élargissement supplémentaire du pore créé autour de la trajectoire 20 s'accompagne d'une diminution correspondante de l'épaisseur de la membrane 5. C'est ce que représente la ligne 25.

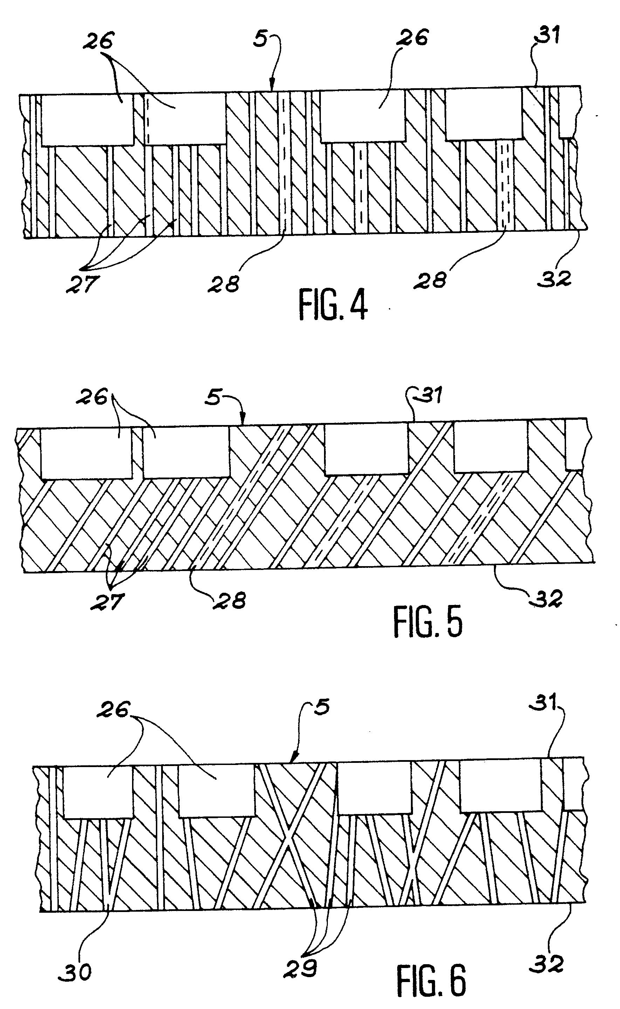

Ces explications permettent de mieux comprendre le procédé de fabrication de membranes microporeuses selon l'invention, et dont des exemples de réalisation sont donnés figures 4 à 6 . La caractéristique majeure est que l'on effectue deux irradiations différentes, l'une de particules à énergie suffisamment faible pour ne pas traverser la membrane 5 et créer des pores non débouchants et de gros diamètre 26 après attaque chimique, et une irradiation de particules à énergie suffisante pour traverser la membrane 5 et créer des pores débouchants de petit diamètre 27 à 29 qui permettent donc seuls de filtrer le fluide. Il est souhaitable que les pores de petit diamètre 27 à 29 débouchent en plus grand nombre possible sur les pores de gros diamètre 26 et non sur la surface 31 sur laquelle les pores de gros diamètre 26 débouchent eux-mêmes : la diminution de la longueur moyenne des pores de petit diamètre 27 à 29 permet en effet, toutes choses égales par ailleurs, d'augmenter le débit de fluide susceptible d'être filtré par la membrane 5 alors que l'emploi d'une membrane de faible épaisseur conduit au même résultat mais au détriment de la résistance mécanique du filtre.

La membrane 5 représentée figure 4 est obtenue à l'aide de l'appareillage de la figure 1 avec une incidence normale du faisceau ($\alpha = 0$ et x = 90°) pour les deux irradiations.

Une première irradiation à faible énergie, suivie par une attaque chimique appropriée, permet d'obtenir les pores non débouchants 26 régulièrement disposés sur la surface 31. L'attaquant peut être par exemple de la soude et la membrane 5 en polycarbonate.

Il est clair que l'obtention de pores 26 de gros diamètre, supérieur en tout cas au centième de millimètre (10μm), nécessite une attaque chimique prolongée qui a pour corollaire une diminution d l'épaisseur de la membrane 5 par attaque de la surface 31 et éventuellement de la surface opposée 32. On est donc amené à prévoir une membrane 5 plus épaisse au début de la fabrication qu'au stade du produit fini.

Après l'attaque chimique, la membrane 5 est de nouveau disposée selon la figure 1 et elle subit une seconde irradiation de particules d'énergie suffisante pour la traverser ; une seconde attaque chimique fournit alors des pores 27 et 28 qui traversent la membrane 5 de part en part, et dont le diamètre, qui conditionne la durée de cette attaque, est déterminé par l'utilisation du filtre. Les dimensions des pores non débouchants 26 et l'épaisseur de la membrane 5 restent à peu près constantes au cours de cette attaque de durée beaucoup plus brève que la première.

Tel quel ce procédé présente deux inconvénients : le premier est que les pores de petit diamètre 27 et 28 sont disposés de façon aléatoire et que la proportion de ceux qui débouchent à l'intérieur des pores de gros diamètre 26 n'est pas supérieure à la porosité de ceux-ci sur la surface 31 : or, pour des considérations mécaniques cette porosité ne peut guère dépasser 20% à 30%. L'utilisation d'angles d'incidence différents pour les deux irradiations permet d'obtenir des pores d'axes non parallèles - ou obliques - selon qu'ils appartiennent à l'un ou à l'autre type (incidences longitudinales $\alpha$ ou transversales $\chi$ différentes pour les deux irradiations), ce qui augmente la probabilité de voir les pores de petit diamètre 27 et 28 déboucher dans les pores de gros diamètre 26.

La figure 5 représente une telle membrane 5 : les pores de petit diamètre 27 et 28 ont un axe oblique par rapport aux droites normales à la membrane 5.

Il subsiste toutefois un autre inconvénient : les impacts très proches réalisés au cours de la seconde irradiation peuvent être la cause de jonctions entre groupes de pores, ce qui donne finalement des pores débouchants de gros diamètre 28 qui diminuent la sélectivité du filtre en permettant, lors de la filtration, à des corpuscules plus gros que le diamètre des pores débouchants 27 de passer.

L'amélioration proposée consiste faire défiler la membrane 5 à deux reprises (ou plus) devant le faisceau d'ions au moment de la création des pores débouchant avec des angles $\chi$ entre la direction moyenne XY du faisceau d'ions et la direction de la membrane perpendiculaire au sens de défilement qui soient différents. On peut préconiser à titre d'exemple $\chi$ $\chi_1 = 60°$ pour une première irradiation et $\chi_2 = 120°$ pour une seconde. La probabilité de pores multiples se trouve réduite car des pores confondus sur une surface 31 ou 32 peuvent ensuite diverger et se séparer. De façon équivalente, on peut modifier l'incidence longitudinale $\alpha$ pour chaque passage de la membrane 5. Si les irradiations successives sont nombreuses, l'incidence des particules sur la membrane 5 peut être considérée comme aléatoire ainsi que les axes des pores de petit diamètre 29. Une membrane 5 ainsi obtenue est représentée figure 6.

Une amélioration d'un autre ordre, que l'on peut combiner avec les précédentes, concerne la fabrication des pores de gros diamètre 26. L'obtention d'un de ces pores à l'aide d'un seul impact de particules nécessite une attaque chimique longue et qui modifie l'épaisseur de la membrane 5. On peut donc préférer réaliser cette irradiation au moyen de l'appareillage de la figure 2 : les zones irradiées 16 correspondent aux dimensions et à la répartition des pores 26 et sont irradiées avec une grande densité de particules. Une attaque chimique unique subséquente provoque donc la création de pores non débouchants qui fusionnent très rapidement et donnent donc naissance aux pores de gros diamètre 26. Outre la rapidité du processus, l'avantage est que l'on maîtrise parfaitement la régularité de répartition de ces pores 26. Les pores débouchants 27 à 29 peuvent éventuellement être obtenus pendant la même attaque chimique.

Il va sans dire que l'invention n'est pas limitée aux modes de réalisation décrits ci-dessus à l'aide d'appareillages particuliers, mais concerne d'une façon générale la fabrication de membranes microporeuses par double irradiation conduisant, après attaque chimique, à deux réseaux de pores dont ceux à plus gros diamètre ne traversent pas la membrane.

En particulier la description précédente a mentionné des irradiations par faisceaux d'ions lourds émis par un accélérateur de particules. Ce choix est naturel dans de nombreux cas à cause de la finesse avec laquelle on peut régler l'énergie du faisceau et donc la profondeur des pores non débouchants, et du pouvoir pénétrant de ces particules. D'autres types d'irradiation peuvent cependant être envisagés (désintégration de matière fissile par exemple).

**Revendications**

1. Procédé de fabrication de membranes microporeuses, caractérisé en ce qu'il comprend une première irradiation de la membrane (5) par des particules d'énergie insuffisante pour la traverser, au moins une seconde irradiation de cette membrane (5) par des particules d'énergie suffisante pour la traverser, et au moins une attaque chimique permettant d'obtenir un double réseau de pores aux emplacements traversés par les particules d'irradiation, de façon à ce que les pores (26) du premier réseau soient de plus gros diamètre et débouchent sur une surface (31) de la membrane (5), et les pores (27 à 29) du second réseau soient de plus petit diamètre et débouchent sur les deux surfaces (31, 32) de la membrane (5) ou sur la surface opposée (32) et dans les pores (26) du premier réseau.

2. Procédé de fabrication de membranes microporeuses selon la revendication 1, caractérisé en ce qu'il comprend successivement la première irradiation par des particules d'énergie insuffisante pour traverser la membrane (5), une première attaque chimique permettant d'obtenir le premier réseau de pores (26), la ou les secondes irradiations par des particules d'énergie suffisante pour traverser la membrane (5), et une seconde attaque chimique permettant d'obtenir le second réseau de pores (27 à 29).

3. Procédé de fabrication de membranes microporeuses selon l'une quelconque des revendications 1 ou 2, caractérisé en ce que les irradiations sont effectuées au moyen d'ions lourds issus d'un accélérateur de particules (1).

4. Procédé de fabrication de membranes microporeuses selon l'une quelconque des revendications 1 à 3, caractérisé en ce que les particules irradient la membrane (5) suivant des incidences $(\alpha, \chi)$ différentes pour les deux irradiations.

5. Procédé de fabrication de membranes microporeuses selon l'une quelconque des revendications 1 à 4, comprenant plusieurs secondes irradiations, caractérisé en ce que les incidences $(\alpha, \chi)$ des particules émises lors des secondes irradiations sur la membrane (5) sont différentes entre elles.

## Claims

1. Process for the production of microporous membranes, characterized in that it comprises a first irradiation of membrane (5) by particles having an energy inadequate for passing through the same, at least one second irradiation of said membrane (5) by particles having an adequate energy to traverse it and at least one chemical etching making it possible to obtain a double network of pores at the locations traversed by the irradiation particles, so that the pores (26) of the first network have a larger diameter and issue on to the surface (31) of the membrane (5) and pores (27 to 29) of the second network have a smaller diameter and issue onto both surfaces (31,32) of membrane (5) or onto the opposite surface (32) and into the pores (26) of the first network.

2. Process for the production of microporous membranes according to claim 1, characterized in that it successively comprises the first irradiation by particles having an energy inadequate for traversing membrane (5), a first chemical etching making it possible to obtain the first network of pores (26), the second irradiation or irradiations by particles having an energy adequate for traversing membrane (5) and a second chemical etching making it possible to obtain the second network of pores (27 to 29).

3. Process for the production of microporous membranes according to either of the claims 1 or 2, characterized in that the irradiations are performed by means of heavy ions of a particle accelerator (1).

4. Process for the production of microporous membranes according to any one of the claims 1 to 3, characterized in that the particles irradiate membrane (5) in accordance with different incidences $(\alpha, \chi)$ for the two irradiations.

5. Process for the production of microporous membranes according to any one of the claims 1 to 4 involving several second irradiations, characterized in that the incidences $(\alpha, \chi)$ of the particles emitted during the second irradiations on membrane (5) are different from one another.

## Patentansprüche

1. Verfahren zur Herstellung von mikroporösen Membranen, dadurch gekennzeichnet, daß es eine erste Bestrahlung der Membran (5) durch Teilchen mit einer Energie, die nicht ausreicht, sie zu durchqueren, wenigstens eine zweite Bestrahlung dieser Membran (5) durch Teilchen, mit einer ausreichenden Energie sie zu durchqueren, und wenigstens einen Beizvorgang aufweist, der ermöglicht, ein doppeltes Porennetz an den Stellen zu erhalten, die von den Bestrahlungsteilchen durchquert wurden, derart, daß die Poren (26) des ersten Netzes den größten Druckmesser aufweisen und auf eine Oberfläche (31) der Membran (5) münden, und die Poren (27-29) des zweiten Netzes vom kleinsten Durchmesser sind und auf die beiden Flächen (31,32) der Membran (5) oder auf die entgegengesetzte Oberfläche (32) und in die Poren (26) des ersten Netzes münden.

2. Verfahren zur Herstellung von mikroporösen Membranen nach Anspruch 1, dadurch gekennzeichnet, daß es aufeinanderfolgend die erste Bestrahlung durch die Teilchen mit nicht ausreichender Energie zum Durchqueren der Membran (5), einen ersten Beizvorgang, der erlaubt, das erste Netz von Poren (26) zu erhalten, die zweite oder die zweiten Bestrahlungen durch die Teilchen mit ausreichender Energie, um die Membran (5) zu durchqueren, und einen zweiten Beizvorgang aufweist, der ermöglicht, das zweite Porennetz (27-29) zu erhalten.

3. Verfahren zur Herstellung von mikroporösen Membranen nach Anspruch 1 oder 2, dadurch gekennzeichnet, daß die Bestrahlungen mittels schweren Ionen durchgeführt werden, die von einem Teilchenbeschleuniger (1) ausgesendet werden.

4. Verfahren zur Herstellung von mikroporösen Membranen nach einem der Ansprüche 1 bis 3, dadurch gekennzeichnet, daß die Teilchen die Membran (5) gemäß unterschiedlicher Einfallswinkel ($\alpha, \chi$) für die beiden Bestrahlungen bestrahlen.

5. Verfahren zum Herstellen von mikroporösen Membranen nach einem der Ansprüche 1 bis 4 mit mehreren zweiten Bestrahlungen, dadurch gekennzeichnet, daß die Einfallsrichtungen ($\alpha, \chi$) der bei den zweiten Bestrahlungen auf die Membran (5) ausgesendeten Teilchen untereinander verschieden sind.

FIG. 1

FIG. 2

FIG. 3

FIG. 4

FIG. 5

FIG. 6